# EUROPEAN PATENT APPLICATION

(11) **EP 4 105 835 A1**
(43) Date of publication of application: **21.12.2022**
(21) Application number: 21765071.2
(22) Date of filing: 30.01.2021
(51) Int. Cl.: G06N 3/04, G06N 3/08

(54) **NEURAL NETWORK ARCHITECTURE SEARCH METHOD AND APPARATUS, DEVICE AND MEDIUM**

(30) Priority: 05.03.2020 CN 202010148339; 14.04.2020 CN 202010290428
(71) Applicant: Huawei Cloud Computing Technologies Co., Ltd., Guizhou 550025 (CN)
(72) Inventor: ZHOU, Weimin, Shenzhen, Guangdong 518129 (CN); GUO, Yijun, Shenzhen, Guangdong 518129 (CN); LI, Yi, Shenzhen, Guangdong 518129 (CN); MAI, Yuting, Shenzhen, Guangdong 518129 (CN); DENG, Binbin, Shenzhen, Guangdong 518129 (CN)
(74) Representative: Gill Jennings & Every LLP
(86) International application number: PCT/CN2021/074533
(87) International publication number: WO 2021/175058

(57) **Abstract**

This application provides a neural architecture search method, applied to a search system. The search system includes a generator and a searcher. The method includes: The generator generates a plurality of neural network architectures based on a search space; the searcher obtains evaluation indicator values of a plurality of child models obtained based on the plurality of neural network architectures on first hardware; and the searcher determines, based on the neural network architectures corresponding to the plurality of child models and the evaluation indicator values of the plurality of child models on the first hardware, a first target neural network architecture that meets a preset condition. In this way, different initial child model training processes are decoupled, and a neural architecture search process is decoupled from an initial child model training process, so that search duration is reduced and search efficiency is improved.

## Description

This application claims priority to Chinese Patent Application No. 202010148339.1, filed with the China National Intellectual Property Administration on March 5, 2020 and entitled "NEURAL ARCHITECTURE SEARCH METHOD AND SYSTEM", and Chinese Patent Application No. 202010290428.X, filed with the China National Intellectual Property Administration on April 14, 2020 and entitled "NEURAL ARCHITECTURE SEARCH METHOD AND APPARATUS, DEVICE, AND MEDIUM", which are incorporated herein by reference in their entireties.

### TECHNICAL FIELD

This application relates to the field of artificial intelligence technologies, and in particular, to a neural architecture search method and apparatus, a device, and a computer-readable storage medium.

### BACKGROUND

With the rise of artificial intelligence (artificial intelligence, AI) technologies, especially the rise of neural networks (neural networks), great progress has been made in many fields such as image processing and audio and video recognition. Currently, an AI-based image processing effect or an audio and video recognition effect usually depends on performance of a used neural network. A neural network with good performance usually requires technical experts with extensive experience to spend a lot of effort in constructing a neural network architecture and then perform training based on the neural network architecture, to obtain a neural network that can be used for a specific application.

Considering costs and efficiency, a neural architecture search (neural architecture search, NAS) method is proposed in the industry, to build a neural network. The NAS refers to defining a search space, and then automatically searching for a neural network architecture in the search space, to obtain a neural network with good performance.

However, search efficiency of existing NAS is usually low and is difficult to meet service requirements. Based on this, the industry urgently needs to provide an efficient neural architecture search method.

### SUMMARY

This application provides a neural architecture search method. In the method, different initial child model training processes are decoupled, and a neural architecture search process is decoupled from an initial child model training process, to resolve a problem in a related technology that search efficiency is low and is difficult to meet service requirements. This application further provides an apparatus, a device, a computer-readable storage medium, and a computer program product that correspond to the method.

According to a first aspect, this application provides a neural architecture search method. In the method, training processes of different initial child models are decoupled, so that the training processes of the different initial child models can be well parallel, and a process of searching for a neural network architecture is decoupled from a training process of an initial child model, so that the process of searching for the neural network architecture and the training process of the initial child model can be well parallel, reducing search duration and improving search efficiency.

Specifically, the method is applied to a search system. The search system includes a generator and a searcher. The generator can generate a plurality of neural network architectures based on a search space, and may obtain a plurality of initial child models by performing weight initialization on the plurality of neural network architectures. A model training platform may train the plurality of initial child models in parallel to obtain a plurality of child models. In this way, training processes of the plurality of initial child models are decoupled.

A model inference platform may perform inference on each child model on first hardware, to obtain an evaluation indicator value of the trained child model on the first hardware. The searcher may obtain evaluation indicator values of the plurality of child models on the first hardware, and determine, based on the evaluation indicator values and the neural network architectures corresponding to the child models, a first target neural network architecture that meets a preset condition. Because searching for the neural network architecture does not need to depend on an actual evaluation indicator value of a previous child model, a neural architecture search process and a training process of an initial child model can also be processed in parallel. In this way, the neural architecture search process is decoupled from the training process of the initial child model.

Based on this, duration of neural architecture search is greatly reduced, and search efficiency is improved.

In some possible implementations, considering that in a related technology, when a controller is trained by using reinforcement learning, a used reward is an actual evaluation indicator value of a child model (that is, an evaluation indicator value obtained by performing inference on the child model on hardware by a model inference platform), and therefore a delay of the reward is large, and search efficiency is substantially affected. Based on this, this application provides a searcher including an evaluator and a controller. The searcher predicts, by using the evaluator, an evaluation indicator value corresponding to a neural network architecture, uses the predicted evaluation indicator value as a reward, and does not need to wait for a model inference platform to perform inference to obtain an actual evaluation indicator value. In this way, a delay of the reward is greatly reduced, and search efficiency is improved.

Specifically, the searcher includes the evaluator and the controller. The searcher trains the evaluator based on the neural network architectures corresponding to the plurality of child models and the evaluation indicator values of the plurality of child models on the first hardware. The searcher trains the controller by using the trained evaluator, and determines, based on the trained controller, the first target neural network architecture that meets the preset condition.

In some possible implementations, the evaluation indicator values of the plurality of child models on the first hardware represent evaluation indicator values obtained by performing inference on the plurality of child models on the first hardware, and the evaluation indicator values are real evaluation indicator values. An evaluator trained by using the real evaluation indicator values has high reliability, and may be used to predict an evaluation indicator value corresponding to a neural network architecture.

In some possible implementations, considering a need to control costs, a change in a supply-demand relationship in a market, or the like, the child model needs to be extended to other hardware or migrated to other hardware such as second hardware. When a design of the second hardware is different from a design of the first hardware, a first target neural network architecture suitable for the first hardware may not be suitable for the second hardware. Based on this, a second target neural network architecture suitable for the second hardware may be further searched for. The second hardware may be known hardware or new hardware.

In the method, a child model obtained through training when the first target neural network architecture suitable for the first hardware is searched for can be used without training a child model again. Therefore, the second target neural network architecture suitable for the second hardware can be quickly determined. Further, an evaluation indicator value includes two types of evaluation indicator values, a first-type evaluation indicator value that changes as hardware changes, and a second-type evaluation indicator value that does not change as hardware changes. When an evaluation indicator value used for searching for the first target neural network architecture suitable for the first hardware includes a second-type evaluation indicator value, the second-type evaluation indicator value of the child model on the first hardware may be further used as a second-type evaluation indicator value of the child model on the second hardware. In this way, a period of time for performing inference on the child model on the second hardware is reduced, so that search time is further reduced and search efficiency is improved.

Specifically, the evaluation indicator value includes a hardware-related performance value. The searcher may obtain performance values of the plurality of child models on the second hardware, where the performance values of the plurality of child models on the second hardware are obtained by performing inference on the plurality of child models on the second hardware. Then, the searcher determines, based on the neural network architectures corresponding to the plurality of child models and the performance values of the plurality of child models on the second hardware, the second target neural network architecture that meets a preset condition.

In some possible implementations, the hardware-related performance value includes any one or more of model inference time, a quantity of activations, throughput, power consumption, and video RAM usage.

In some possible implementations, the search space is represented by using an attribute value space of each attribute of a neuron. The generator may randomly select an attribute value for each attribute from the attribute value space of the attribute of the neuron, to obtain the plurality of neural network architectures. In this way, balance of samples for training the evaluator can be ensured.

Considering that a random sampling process may generate same neural network architectures, to avoid generating repeated samples and reduce a quantity of samples, the generator may intervene in the random sampling process. Specifically, the generator may randomly select an attribute value for each attribute from the attribute value space of the attribute of the neuron, to obtain a neural network architecture, and then randomly select an attribute value for each attribute from an attribute value other than the selected attribute value in the attribute value space, to obtain another neural network architecture.

Further, when an attribute value of one attribute (that is, a first attribute) of the neuron covers a corresponding attribute value space, but another attribute (that is, a second attribute) of the neuron does not cover a corresponding attribute value space, the generator may randomly select an attribute value for the first attribute from the attribute value space of the first attribute of the neuron, and randomly select an attribute value for the second attribute from an attribute value other than a selected attribute value in the attribute value space of the second attribute of the neuron, to generate a new neural network architecture. When attribute values of each attribute of the neuron in neural network architectures cover the corresponding attribute value space, the generator generates a group of neural network architectures.

In some possible implementations, to protect data security, for example, security of the search space and the neural network architecture, the generator may provide an application programming interface for a user, and generate the plurality of neural network architectures for the user through the application programming interface.

In some possible implementations, when the user provides different datasets, the search system may further implement neural architecture search without data exchange. In this way, a data silo can be broken, and performance/precision of a neural network architecture obtained through the search can be improved.

Specifically, the search system further includes a model training platform. The model training platform may train, by using M datasets, N initial child models obtained based on a plurality of neural network architectures, and the neural network architectures are in a one-to-one correspondence with the initial child models, where N is greater than 1, and M is greater than 1.

The model training platform may train the N initial child models in the following manners.

In a first implementation, the model training platform performs federated learning on each of the N initial child models by using the M datasets, to obtain N child models;
in a second implementation, the model training platform trains each of the N initial child models by using the M datasets, to obtain N^{∗}M child models; or
in a third implementation, the model training platform divides the N initial child models into M groups of initial child models, where the M groups of initial child models are in a one-to-one correspondence with the M datasets, and trains the M groups of initial child models by using the corresponding datasets, to obtain M groups of child models.

According to a second aspect, this application provides a neural architecture search apparatus. The apparatus is applied to a search system, the search system includes a generator and a searcher, and the apparatus includes:
a generation module, configured to generate a plurality of neural network architectures based on a search space;
a communications module, configured to obtain evaluation indicator values of a plurality of child models obtained based on the plurality of neural network architectures on first hardware; and
a search module, configured to determine, based on the neural network architectures corresponding to the plurality of child models and the evaluation indicator values of the plurality of child models on the first hardware, a first target neural network architecture that meets a preset condition.

In some possible implementations, the searcher includes an evaluator and a controller, and the search module is specifically configured to:
train the evaluator based on the neural network architectures corresponding to the plurality of child models and the evaluation indicator values of the plurality of child models on the first hardware; and
train the controller by using the trained evaluator, and determine, based on the trained controller, the first target neural network architecture that meets the preset condition.

In some possible implementations, the evaluation indicator values of the plurality of child models on the first hardware indicate evaluation indicator values obtained by performing inference on the plurality of child models on the first hardware.

In some possible implementations, the evaluation indicator value includes a hardware-related performance value, and the communications module is further configured to:
obtain performance values of the plurality of child models on second hardware, where the performance values of the plurality of child models on the second hardware are obtained by performing inference on the plurality of child models on the second hardware; and
the search module is further configured to:
   determine, based on the neural network architectures corresponding to the plurality of child models and the performance values of the plurality of child models on the second hardware, a second target neural network architecture that meets a preset condition.

In some possible implementations, the hardware-related performance value includes any one or more of model inference time, a quantity of activations, throughput, power consumption, and video RAM usage.

In some possible implementations, the search space is represented by using an attribute value space of each attribute of a neuron.

The generation module is specifically configured to:
randomly select an attribute value for each attribute from the attribute value space of the attribute of the neuron, to obtain the plurality of neural network architectures.

In some possible implementations, the generation module is specifically configured to:
provide an application programming interface to a user, and generate the plurality of neural network architectures for the user through the application programming interface.

In some possible implementations, the search system further includes a model training platform, and the apparatus further includes a training module, configured to:
perform federated learning on each of N initial child models by using M datasets, to obtain N child models; or
train each of N initial child models by using M datasets, to obtain N^{∗}M child models; or
divide N initial child models into M groups of initial child models, where the M groups of initial child models are in a one-to-one correspondence with M datasets, and train the M groups of initial child models by using the corresponding datasets, to obtain M groups of child models.

The N initial child models are obtained based on the plurality of neural network architectures, and the initial child models are in a one-to-one correspondence with the neural network architectures, where N is greater than 1, and M is greater than 1.

According to a third aspect, this application provides a computer cluster, where the computer cluster includes at least one computer, and each computer includes a processor and a memory. The processor and the memory communicate with each other. The processor of the at least one computer is configured to execute instructions stored in the memory of the at least one computer, so that the computer cluster performs the neural architecture search method according to any one of the first aspect or the implementations of the first aspect.

According to a fourth aspect, this application provides a computer-readable storage medium. The computer-readable storage medium stores instructions. When the instructions are run on a computer cluster, the computer cluster performs the neural architecture search method according to any one of the first aspect or the implementations of the first aspect.

According to a fifth aspect, this application provides a computer program product including instructions. When the computer program product runs on a computer cluster, the computer cluster performs the neural architecture search method according to any one of the first aspect or the implementations of the first aspect.

In this application, based on the implementations according to the foregoing aspects, the implementations may be further combined to provide more implementations.

### BRIEF DESCRIPTION OF DRAWINGS

To describe technical methods in embodiments of this application more clearly, the following briefly describes the accompanying drawings for the embodiments.
FIG. 1 is a schematic flowchart of neural architecture search according to an embodiment of this application;
FIG. 2 is a schematic diagram 100 of an architecture of a search system according to an embodiment of this application;
FIG. 3 is a schematic diagram 200 of an architecture of a search system according to an embodiment of this application;
FIG. 4 is an interaction flowchart of a neural architecture search method according to an embodiment of this application;
FIG. 5 is a schematic diagram of generating a neural network architecture according to an embodiment of this application;
FIG. 6 is a schematic diagram of generating a neural network architecture according to an embodiment of this application;
FIG. 7 is a schematic flowchart of determining a first target neural network architecture according to an embodiment of this application;
FIG. 8 is a schematic diagram of a structure of an evaluator according to an embodiment of this application;
FIG. 9 is a schematic flowchart of determining a second target neural network architecture according to an embodiment of this application;
FIG. 10 is a schematic flowchart of neural architecture search according to an embodiment of this application;
FIG. 11 is a schematic flowchart of neural architecture search according to an embodiment of this application;
FIG. 12 is a schematic flowchart of neural architecture search according to an embodiment of this application;
FIG. 13 is a schematic diagram of a structure of a neural architecture search apparatus according to an embodiment of this application; and
FIG. 14 is a schematic diagram of a structure of a computer cluster according to an embodiment of this application.

### DESCRIPTION OF EMBODIMENTS

The following describes solutions in embodiments provided in this application with reference to the accompanying drawings in this application.

In the specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, and this is merely a distinguishing manner for describing objects having a same attribute in embodiments of this application.

To facilitate understanding of the technical solutions in this application, some technical terms in this application are described below.

A neural network (neural network, NN) is a mathematical model that simulates a neural network of a human brain to implement artificial intelligence. The neural network may also be referred to as a neural network model. The neural network usually simulates a neural network of a human brain by using a plurality of neurons (also referred to as nodes, nodes) that have a connection relationship, to implement tasks such as image classification and speech recognition.

A structure obtained by connecting neurons in each neural network is referred to as a neural network architecture of the neural network. A typical neural network architecture includes a recurrent neural network (recurrent neural network, RNN), a convolutional neural network (convolutional neural network, CNN), and the like. The neural network architecture may be represented by using a directed graph. Each edge in the directed graph has a weight, and the weight is used to represent importance of an input node on one edge relative to an output node on the edge. A parameter of the neural network includes the foregoing weight. It should be noted that the weight may be usually obtained by training the neural network by using a sample.

Obtaining a neural network model based on the neural network architecture includes two phases. In one phase, weight initialization (weight initialization) is performed on the neural network architecture to obtain an initial neural network model, which is also referred to as an initial child model. The weight initialization means initializing a weight (and an offset is further included in some cases) of each edge in the neural network architecture. In a specific implementation, an initial weight value may be generated through Gaussian distribution, to implement the weight initialization. In the other phase, sample data is used to update a weight of the initial child model to obtain a child model (child model). Specifically, the sample data is input into the initial child model. The initial child model may determine a loss value based on a predicted value and a true value that is carried in the sample data, and update the weight of the initial child model based on the loss value. A child model can be obtained through a plurality of rounds of weight iteration. The child model is a trained neural network model that can be used for a specific application.

Quality of a child model can be measured by using an evaluation indicator value of the child model. The evaluation indicator value is a metric value obtained by evaluating the child model from at least one dimension. Evaluation indicator values of a child model may be classified into two types. One type of evaluation indicator value changes as hardware changes, and the other type of evaluation indicator value remains unchanged as hardware changes. For ease of description, in this application, an evaluation indicator value that changes as hardware changes is referred to as a first-type evaluation indicator value, and an evaluation indicator value that remains unchanged as hardware changes is referred to as a second-type evaluation indicator value.

The first-type evaluation indicator value is a hardware-related evaluation indicator value, including a hardware-related performance value. In some implementations, the hardware-related performance value includes any one or more of model inference time, a quantity of activations, throughput, power consumption, and video RAM usage. The second-type evaluation indicator value is an evaluation indicator value irrelevant to hardware, including a precision value irrelevant to hardware. In some implementations, the precision value includes any one or more of accuracy (accuracy), precision (precision), and recall (recall). The evaluation indicator value irrelevant to hardware further includes a parameter quantity and computing power, and the computing power specifically includes floating-point operations per second (floating-point operations per second, FLOPs).

For current neural network-based tasks, manual exploration of a new neural network architecture by researchers is still a main process. Performance of a neural network often depends on understanding of the tasks and imagination in the neural network architecture design. An entire process of a neural network architecture design requires the researchers to have a full understanding of related fields, which indirectly lifts an entry barrier for practitioners. In addition, it is time-consuming for the researchers to continuously improve a neural network architecture in a manual manner.

As computing power and storage capabilities of computer devices increase year by year in recent years, a neural architecture search (neural architecture search, NAS) method is proposed in the industry, to implement an automatic neural network architecture design. Similar to learning a weight of a neural network by a computer, the computer may also learn a neural network architecture from a search space (search space) by using the NAS, to implement a neural network architecture design.

The search space defines a search range, and a set of searchable neural network architectures may be provided based on the range. Based on a type of a neural network that needs to be constructed, the search space may be classified into a plurality of types such as a chain architecture space, a multi-branch architecture space, and a search space based on a block (block). The foregoing different types of search spaces may be represented by using attribute value spaces corresponding to attributes of neurons (that is, nodes) included in a neural network architecture. For ease of understanding, a block-based search space is used as an example below for description.

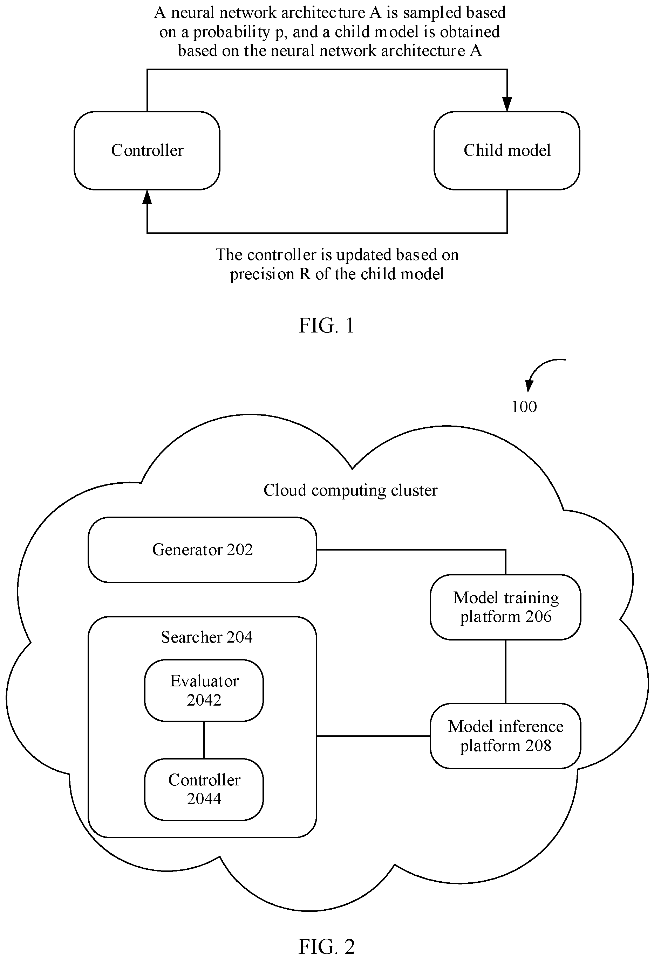

FIG. 1 shows a principle of searching a search space for a neural network architecture. As shown in FIG. 1, an RNN-based control neural network, which is also referred to as a controller (controller), samples a neural network architecture A from a search space by using a probability p, performs weight initialization on the neural network architecture A to obtain an initial child model, trains the initial child model to obtain a child model, and obtains precision R of the child model in a validation set. Then, a parameter of the controller is updated by using the precision R. The foregoing steps are cyclically performed until the controller converges, to obtain a high-performance neural network architecture, and implement a neural network architecture design.

Generating a new neural network architecture depends on training the controller by using precision of a previous child model, and generating a new child model depends on training an initial child model obtained by performing weight initialization on the new neural network architecture. In other words, training processes of a plurality of initial child models cannot be well parallel. In addition, a process of searching for the neural network architecture depends on a training process of the initial child model. That is, a degree of coupling between the process of searching for the neural network architecture and the training process of the initial child model is high, and the process of searching for the neural network architecture and the training process of the initial child model cannot be well parallel. As a result, search efficiency is low and search takes a long time.

In view of this, embodiments of this application provide a neural architecture search method. In the method, a process of searching for a neural network architecture is decoupled from a training process of an initial child model, and training processes of different initial child models are decoupled, so that the process of searching for the neural network architecture and the training process of the initial child model can be well parallel, and the training processes of the different initial child models can also be well parallel. In this way, search duration is reduced and search efficiency is improved.

Specifically, the method is applied to a search system. The search system includes a generator (generator) and a searcher (searcher). The generator can generate a plurality of neural network architectures based on a search space, and may obtain a plurality of initial child models by performing weight initialization on the plurality of neural network architectures. A model training platform may train the plurality of initial child models in parallel to obtain a plurality of child models. In this way, training processes of the plurality of initial child models are decoupled. A model inference platform may perform inference on each child model on first hardware, to obtain an evaluation indicator value of the trained child model on the first hardware. The searcher may obtain evaluation indicator values of the plurality of child models on the first hardware, and determine, based on the evaluation indicator values and the neural network architectures corresponding to the child models, a first target neural network architecture that meets a preset condition. Because searching for the neural network architecture does not need to depend on an actual evaluation indicator value of a previous child model, a neural architecture search process and a training process of an initial child model can also be processed in parallel. In this way, the neural architecture search process is decoupled from the training process of the initial child model. Therefore, duration of neural architecture search is greatly reduced, and search efficiency is improved.

In some embodiments, the model training platform may be on a service side. For example, the model training platform may be provided by a provider of a neural architecture search cloud service. Certainly, in some other embodiments, the model training platform may alternatively be on a user side. That is, the model training platform may be provided by a user who needs to perform neural architecture search. The model training platform provided by the user is used to train the child model, so that leakage of training data used to train the child model can be avoided, and data security is ensured.

Similarly, the model inference platform may be on the service side, or may be on the user side. When the model inference platform is on the user side, the model inference platform provided by the user performs inference on a child model obtained through training by the model training platform to obtain an evaluation indicator value. The child model does not need to be uploaded to the server side, so that leakage of the child model can be avoided, and model privacy can be ensured.

Further, existing NAS trains the controller in a reinforcement learning (reinforcement learning, RL) manner. Reinforcement learning requires a large amount of training data, and a training convergence period is long. In addition, during training of the controller, a delay of a reward (reward) corresponding to each control policy is large, and usually dozens of milliseconds are required for returning a reward. Based on this, an embodiment of this application provides a searcher. The searcher includes a controller and an evaluator. The controller may also be referred to as a screener.

During training of the evaluator, the searcher uses a neural network architecture generated by the generator and an evaluation indicator value of a child model corresponding to the neural network architecture as training data to perform supervised learning, so that training time can be greatly reduced, and training efficiency can be improved. In addition, the neural network architecture and the corresponding evaluation indicator value can be reused to train the evaluator for a plurality of epochs (epochs). In this way, an amount of data required for training is reduced, and training data utilization is improved.

After training of the evaluator is completed, the evaluator may be used to provide feedback to the controller. Specifically, the trained evaluator predicts an evaluation indicator value that is of a neural network architecture provided by the controller, and the evaluation indicator value is used as a reward of the controller. An actual evaluation indicator value of a child model does not need to be used, so that training efficiency is improved. After training of the controller is completed, the controller may output a candidate neural network architecture, and select, from the candidate neural network architecture, the first target neural network architecture that meets a preset condition.

Because training of the evaluator and the controller can be quickly completed, the controller can quickly output the candidate neural network architecture, and quickly select, from the candidate neural network architecture, the first target neural network architecture that meets a preset condition. This further reduces the duration of neural architecture search, and improves the search efficiency.

The neural architecture search method provided in embodiments of this application may include but is not limited to being applied to an application scenario shown in FIG. 2.

As shown in FIG. 2, a search system includes a generator 202, a searcher 204, a model training platform 206, and a model inference platform 208. The generator 202 is configured to generate a plurality of neural network architectures based on a search space. The model training platform 206 is configured to train a plurality of initial child models obtained based on the plurality of neural network architectures, to obtain a plurality of child models. The model inference platform 208 is configured to perform inference on the plurality of child models on first hardware, to obtain evaluation indicator values of the plurality of child models on the first hardware. The searcher 208 is configured to determine, based on the neural network architectures corresponding to the plurality of child models and the evaluation indicator values of the plurality of child models on the first hardware, a first target neural network architecture that meets a preset condition.

In this application scenario, the generator 202, the searcher 204, the model training platform 206, and the model inference platform 208 are deployed in a same cloud computing cluster (the cloud computing cluster includes at least one cloud computing device such as a cloud server), which is specifically a cloud computing cluster on a service side.

Specifically, the generator 202 samples the search space to generate the plurality of neural network architectures. The neural network architecture generated by the generator 202 may be specifically represented by using codes. The model training platform 206 may perform weight initialization on the plurality of neural network architectures to obtain the plurality of initial child models, and then train the plurality of initial child models to obtain the plurality of child models. When the neural network architecture is represented by using codes, the model training platform 206 first parses the codes to obtain the neural network architectures, and then performs the weight initialization and trains the initial child models. The model inference platform 208 may perform inference on the plurality of trained child models on the first hardware, to obtain evaluation indicator values of the child models on the first hardware.

Then, the searcher 204 may obtain the neural network architectures corresponding to the plurality of child models and the evaluation indicator values of the plurality of child models on the first hardware, and train an evaluator 2042 based on the neural network architectures corresponding to the plurality of child models and the evaluation indicator values of the plurality of child models on the first hardware. Specifically, the searcher 204 trains the evaluator 2042 in a supervised learning manner by using the evaluation indicator value as a label. Considering privacy security, when training the evaluator, the searcher 204 may further replace the neural network architecture with code of the neural network architecture.

After training of the evaluator 2042 is completed, the searcher 204 may train a controller 2044 by using the trained evaluator 2042, and then determine, based on the trained controller 2044, the first target neural network architecture that meets the preset condition. Specifically, the controller 2044 may provide a neural network architecture, the evaluator 2042 may predict an evaluation indicator value of the neural network architecture, and the searcher 204 may use the predicted evaluation indicator value as a reward of the neural network architecture to update a parameter of the controller 2044. It is unnecessary to perform weight initialization on the neural network architecture to obtain an initial child model, then train the initial child model to obtain a child model, and perform inference on the child model by using the model inference platform, to obtain an actual evaluation indicator value. In this way, a neural architecture search process is decoupled from a training process of the initial child model, search duration is reduced, and search efficiency is improved.

After training of the controller 2044 is completed, for example, after the controller 2044 converges, the controller 2044 may output at least one candidate neural network architecture. The searcher 204 may determine, from the candidate neural network architecture, the first target neural network architecture that meets the preset condition. Specifically, one initial child model may be generated based on each candidate neural network architecture output by the controller 2044, and one child model may be obtained after the initial child model is trained. When a child model meets the preset condition, for example, an evaluation indicator value of the child model reaches a preset value, a candidate neural network architecture corresponding to the child model may be determined as the first target neural network architecture, which is to be used for a specific application.

FIG. 2 describes an example in which the search system includes the model training platform 206 and the model inference platform 208, and the generator 202, the searcher 204, the model training platform 206, and the model inference platform 208 that are of the search system are deployed in the same cloud computing cluster. In some possible implementations, considering security of training data used for training an initial child model and a child model obtained through training, a search system may alternatively not include the model training platform 206 and the model inference platform 208, and may interact with a model training platform 206 and a model inference platform 208 that are on a user side to implement neural architecture search.

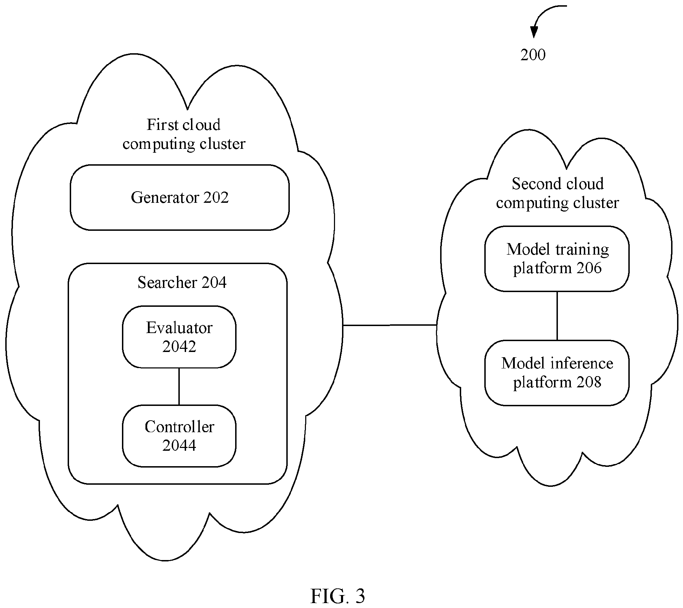

Specifically, as shown in FIG. 3, a generator 202 and a searcher 204 are deployed in a first cloud computing cluster, which may be specifically a cloud computing cluster on a service side. A model training platform 206 and a model inference platform 208 are deployed in a second cloud computing cluster, which may be specifically a cloud computing cluster on a user side. The cloud computing cluster on the service side may be a public cloud, and the cloud computing cluster on the user side may be a private cloud. In this way, neural architecture search can be implemented based on a hybrid cloud formed by the public cloud and the private cloud.

In the scenario shown in FIG. 3, after generating a plurality of neural network architectures, the generator 202 transmits code of each neural network architecture to the model training platform 206 on the user side. The model training platform 206 may parse the code of the neural network architecture to obtain the neural network architecture, then perform weight initialization on the neural network architecture to obtain an initial child model, and train the initial child model by using training data to obtain a child model. Then, the model inference platform 208 on the user side may perform inference on the child model on first hardware, to obtain an evaluation indicator value of the child model on the first hardware. The code of each neural network architecture and the evaluation indicator value of the corresponding child model on the first hardware may be transmitted to the searcher 204 on the server side. The searcher 204 trains an evaluator 2042 by using the foregoing code and the corresponding evaluation indicator value, and may train a controller 2044 by using the evaluator 2042 after training of the evaluator 2042 is completed. When training of the controller 2044 is completed, the controller 2044 may output at least one candidate neural network architecture, and may determine, from the candidate neural network architecture, a first target neural network architecture that meets a preset condition.

It should be noted that FIG. 2 and FIG. 3 are merely some specific examples of application scenarios of the neural architecture search provided in embodiments of this application. In some possible implementations, the generator 202, the searcher 204, the model training platform 206, and the model inference platform 208 may be separately deployed in different cloud computing clusters, or may be deployed in different cloud computing clusters in a form of a pairwise combination, or may be deployed in a form in which any three of the generator 202, the searcher 204, the model training platform 206, and the model inference platform 208 are deployed in one cloud computing cluster as a combination, and the remaining one is deployed in another cloud computing cluster. Certainly, the generator 202, the searcher 204, the model training platform 206, and the model inference platform 208 may alternatively not be deployed in a cloud computing cluster, but are directly deployed in a physical device such as a server, or some of the generator 202, the searcher 204, the model training platform 206, and the model inference platform 208 are deployed in a cloud computing cluster, and the other parts are deployed in a physical device.

To facilitate understanding of the technical solutions in embodiments of this application, the following describes the neural architecture search method in embodiments of this application from a perspective of interaction between the generator 202, the searcher 204, the model training platform 206, and the model inference platform 208.

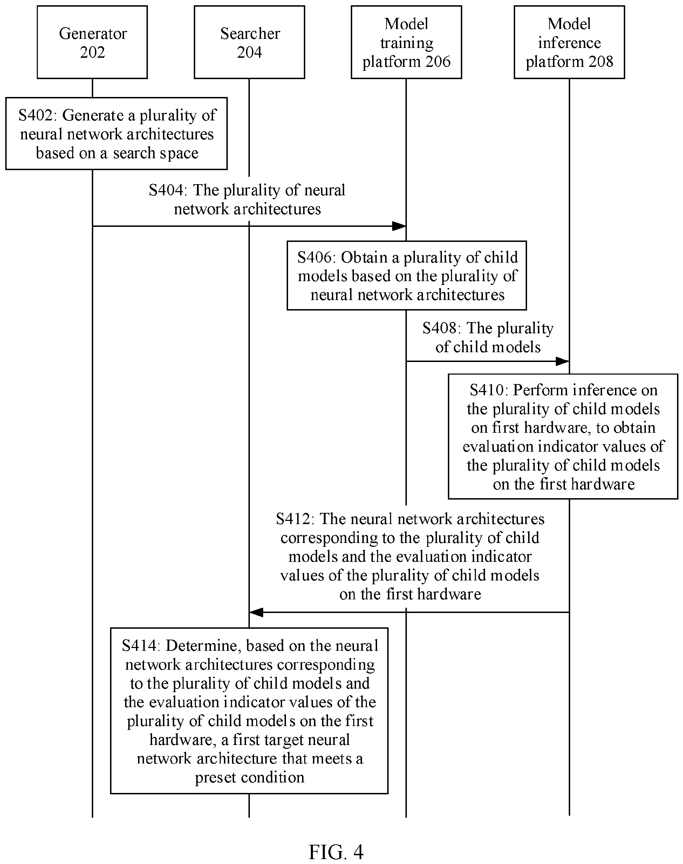

Refer to a flowchart of a neural architecture search method shown in FIG. 4. The method includes the following steps.

S402: The generator 202 generates a plurality of neural network architectures based on a search space.

The search space may be represented by using an attribute value space corresponding to attributes of neurons (also referred to as nodes (node)) included in a neural network architecture. For example, the search space may be represented by using attribute value spaces of an identity (identity, id)) and an operation (operation, op), which are two attributes of each of the neurons. In some cases, the search space may alternatively be represented by using at least one of a quantity of layers (layer) included in a neural network architecture, block (block) data included at each layer, and a quantity of neurons included in each block. Further, the generator 202 may code attribute values of the neurons included in the neural network architecture, and a coding result may be used to represent the neural network architecture.

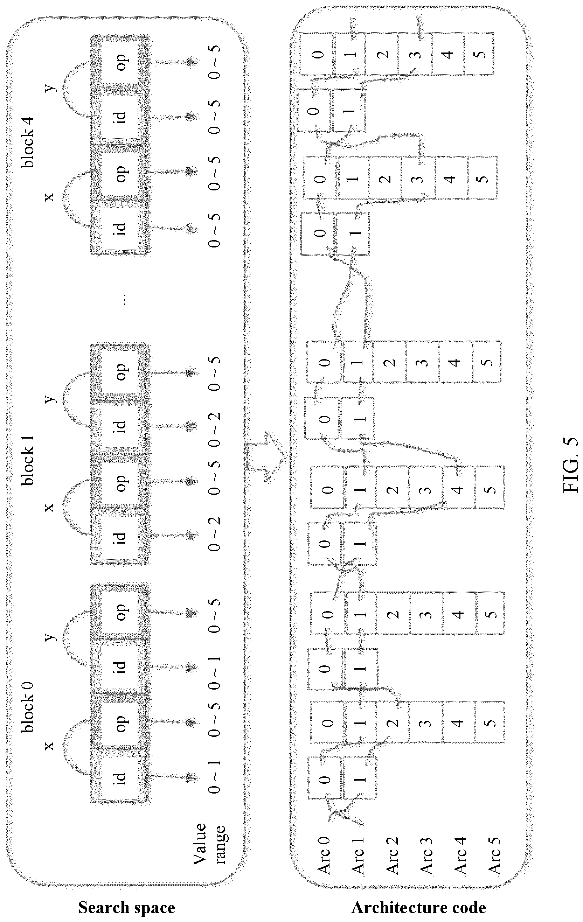

To facilitate understanding, this application further provides a specific example of a search space. As shown in FIG. 5, in this example, the search space is defined as follows: One layer includes five blocks (specifically, block 0 to block 4), each block includes two nodes x and y, and the two nodes x and y each have two attributes, an id and an op.

An attribute value space (that is, a value range) of an id attribute in block 0 is {0, 1}, and an attribute value space of an id attribute in block i is {0, 1, ..., i+1}, which indicates an id that can be selected. In addition, an attribute value space of an op attribute of each block is {0, 1, ..., 5}, which indicates that each operation includes six optional operations.

The generator 202 may perform sampling in the search space to generate a plurality of neural network architectures. When performing sampling in the search space, the generator 202 may perform sampling in a random manner. In this way, balance of samples for training the evaluator 2042 can be ensured.

Considering that a random sampling process may generate same neural network architectures, to avoid generating repeated samples and reduce a quantity of samples, the generator 202 may intervene in the random sampling process. Specifically, the generator 202 may randomly select an attribute value for each attribute from the attribute value space of the attribute of the neuron, to obtain a neural network architecture, and then randomly select an attribute value for each attribute from an attribute value other than the selected attribute value in the attribute value space, to obtain another neural network architecture.

When an attribute value of one attribute (referred to as a first attribute below) of the neuron covers a corresponding attribute value space, but another attribute (referred to as a second attribute below) of the neuron does not cover a corresponding attribute value space, the generator 202 may randomly select an attribute value for the first attribute from the attribute value space of the first attribute of the neuron, and randomly select an attribute value for the second attribute from an attribute value other than a selected attribute value in the attribute value space of the second attribute of the neuron, to generate a new neural network architecture. When attribute values of each attribute of the neuron in neural network architectures cover the corresponding attribute value space, the generator 202 generates a group of neural network architectures.

As shown in FIG. 5, in a first neural network architecture, values of the id and the op of each of the two nodes x and y of the block 0 are randomly selected from the value ranges, and in a second neural network architecture, values of the id and the op of each of the two nodes xand y of the block 0 are randomly selected from remaining value ranges obtained by excluding the values selected in the first neural network architecture from the value ranges. By analogy, the foregoing operations are performed on each block. When attribute values of each attribute of the neuron in neural network architectures cover the corresponding attribute value space, codes of the plurality of neural network architectures (briefly referred to as a plurality of architecture codes) are used as a batch of architecture data. The generator 202 may loop through the foregoing operations to generate a plurality of batches of architecture data.

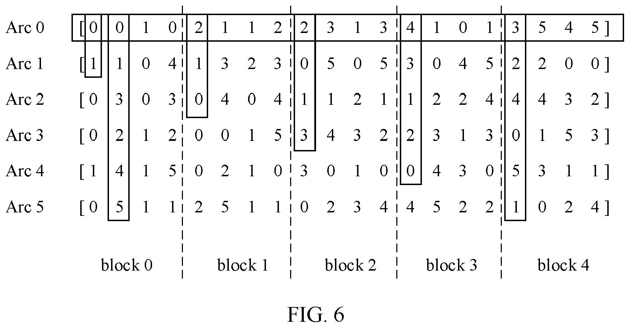

To facilitate understanding, this application further provides a specific example to describe in detail a process of generating a neural network architecture. As shown in FIG. 6, a maximum quantity of values of each attribute of a neuron is 6. Therefore, each batch of architecture data includes six pieces of architecture data. A specific generation process is as follows:

In a first piece of architecture data, 0 is randomly selected from 0 and 1 for an id of a node x of a block 0, 0 is randomly selected from six values from 0 to 5 for an op of the x node of the block 0, and values are also randomly selected for remaining positions. Therefore, the first piece of architecture data Arc 0 is generated.

In a second piece of architecture data, for the id of the node x of the block 0, the value range includes 0 and 1, and after 0 selected in Arc 0 is subtracted from the value range, a remaining value range includes 1. Therefore, only 1 can be selected. For the op of the node x of the block 0, the value range is from 0 to 5, and after 0 selected in Arc 0 is subtracted from the value range, 1 is randomly selected from a remaining value range from 1 to 5. By analogy, random selection is performed for a node y of the block 0 and nodes x/y of remaining blocks in the foregoing manner, to generate the second piece of architecture data Arc 1.

In a third piece of architecture data, a value range of the id of the node x of the block 0 includes 0 and 1. Because Arc 0 and Arc 1 already cover the value range, a number is randomly selected from the value range. Here, 0 is selected. For the op of the node x of the block 0, the value range is from 0 to 5, and after 0 selected in Arc 0 and 1 selected in Arc 1 are subtracted from the value range, 3 is selected from a remaining value range from 2 to 5. By analogy, random selection is performed for a node y of the block 0 and nodes x/y of remaining blocks in the foregoing manner, to generate the third piece of architecture data Arc 2.

The rest may be deduced by analogy until an op of each node in a sixth piece of architecture data covers the value range from 0 to 5, and the batch of architecture data is generated.

It should be further noted that the search space may be defined by a user, or may be automatically generated by a search system. Specifically, the user may configure a target scenario, for example, an image classification scenario or an object detection scenario. The search system may search for a built-in search space based on the target scenario, and then determine, based on the built-in search space, a search space that matches the target scenario.

S404: The generator 202 sends the plurality of neural network architectures to the model training platform 206.

Specifically, the generator 202 may send codes of the plurality of neural network architectures to the model training platform 206. The generator 202 may send the codes of the neural network architecture in batches. For example, the generator 202 sends a batch of architecture data at a time, and sends a plurality of batches of architecture data in a plurality of times. Certainly, the generator 202 may alternatively send a plurality of batches of codes of the neural network architectures at a time, for example, send a plurality of batches of architecture data at a time, so that transmission efficiency can be improved, and transmission resources can be saved.

S406: The model training platform 206 obtains a plurality of child models based on the plurality of neural network architectures.

Specifically, the model training platform 206 may perform weight initialization on the neural network architectures to obtain a plurality of initial child models, and then train the plurality of initial child models by using training data, to obtain the plurality of child models. When obtaining the code of the neural network architecture from the generator 202, the model training platform 206 further needs to first parse the code of the neural network architecture to obtain the neural network architecture. For example, when a code of a neural network architecture is [1 5 0 0 0 2 0 5 0 5 1 1 15 4 2 4 5 5 3], a neural network architecture of a child model obtained by the model training platform 206 by parsing the code is as follows: Each layer includes five blocks; an id of a node x in a block 0 is 1, and an op of the node x in the block 0 is 5; an id of a node y in a block 1 is 0, and an op of the node y in the block 1 is 0; and the rest may be deduced by analogy. Details are not described herein again.

The training data used for training the initial child models may be a dataset corresponding to a task. For example, for an image classification task, the training data may be a public dataset ImageNet 1000, another public dataset used for image classification, or a dataset provided by the user. For another example, for an object detection task, the training data may be a public dataset such as a visual object classification (visual object classification, VOC) or common objects in context (common objects in context, COCO), or a dataset provided by a user.

When training the child models, the model training platform 206 may set a batch size (batch size), and then train the initial child models in a manner of iteration in batches, so that training efficiency can be improved, and training convergence time can be reduced. Specifically, the model training platform 206 may input the training data in batches based on the batch size, and then update an initial child model parameter once based on one batch of training data by using a gradient descent method, to implement one time of iterative training. The model training platform 206 performs a plurality of times of iterative training in the foregoing manner, and stops training when a training termination condition is met, for example, the child model converges or a loss value of the child model is less than a preset loss value.

In this embodiment of this application, there is no interdependency between training processes of the initial child models. Therefore, the model training platform 206 may train the plurality of initial child models concurrently, so that training duration can be reduced, and training efficiency can be improved. For example, when there are 600 initial child models, the model training platform 206 may perform parallel training on the 600 initial child models by using six machines. Each machine is equipped with eight V100 graphics processing units (graphics processing units, GPU), so that a concurrency speed can be further improved, and further parallel training efficiency is improved.

S408: The model training platform 206 sends the plurality of child models to the model inference platform 208.

The model training platform 206 sends trained child models to the model inference platform. Each child model may be represented by using a code of a neural network architecture corresponding to the child model and a parameter set (a set of model parameters, usually a set of weights). Based on this, when sending the child model to the model inference platform 208, the model training platform 206 may send the code and the parameter set of the neural network architecture corresponding to the child model.

S410: The model inference platform 208 performs inference on the plurality of child models on the first hardware, to obtain evaluation indicator values of the plurality of child models on the first hardware.

The model inference platform 208 may perform inference on the child model on the first hardware in at least one dimension, to obtain at least one evaluation indicator value, for example, evaluation indicator values such as precision, a parameter quantity, computing power, and model inference time. The computing power may be specifically measured by using floating-point operations per second FLOPs.

Similar to the model training platform 206, the model inference platform 208 may perform inference on the plurality of child models on the first hardware in parallel, to obtain the evaluation indicator values of the plurality of child models on the first hardware. The evaluation indicator value obtained by the model inference platform 208 by performing inference on the child model is a real indicator value.

S412: The model inference platform 208 sends, to the searcher 204, the neural network architectures corresponding to the plurality of child models and the evaluation indicator values of the plurality of child models on the first hardware.

When sending the neural network architectures, the model inference platform 208 may send codes of the neural network architecture. The model inference platform 208 interacts with the searcher 204 in the search system by using the codes and the evaluating indicator values, so that a privacy protection requirement can be satisfied.

S414: The searcher 204 determines, based on the neural network architectures corresponding to the plurality of child models and the evaluation indicator values of the plurality of child models on the first hardware, a first target neural network architecture that meets a preset condition.

The searcher 204 searches for a neural network architecture based on the neural network architectures corresponding to the plurality of child models and the evaluation indicator values of the plurality of child models on the first hardware. Generating a new neural network architecture no longer depends on training the controller by using a previous child model, and generating a new child model no longer depends on training an initial child model obtained by performing weight initialization on the new neural network architecture. Therefore, time for searching for the neural network architecture is reduced, and search efficiency is improved. The first target neural network architecture that meets the preset condition can be quickly determined.

In conventional neural architecture search, a controller is trained through reinforcement learning, and a reward used to train the controller is a real evaluation indicator value that is of a child model obtained based on a neural network architecture. As a result, a delay in obtaining the reward by the controller is long, and training efficiency is greatly affected, affecting search efficiency.

Based on this, this application provides a method of directly predicting an evaluation indicator value of a neural network architecture by using an evaluator, and training a controller based on the predicted evaluation indicator value, to reduce a delay in obtaining a reward by the controller, so that training efficiency is improved, and further search efficiency is improved.

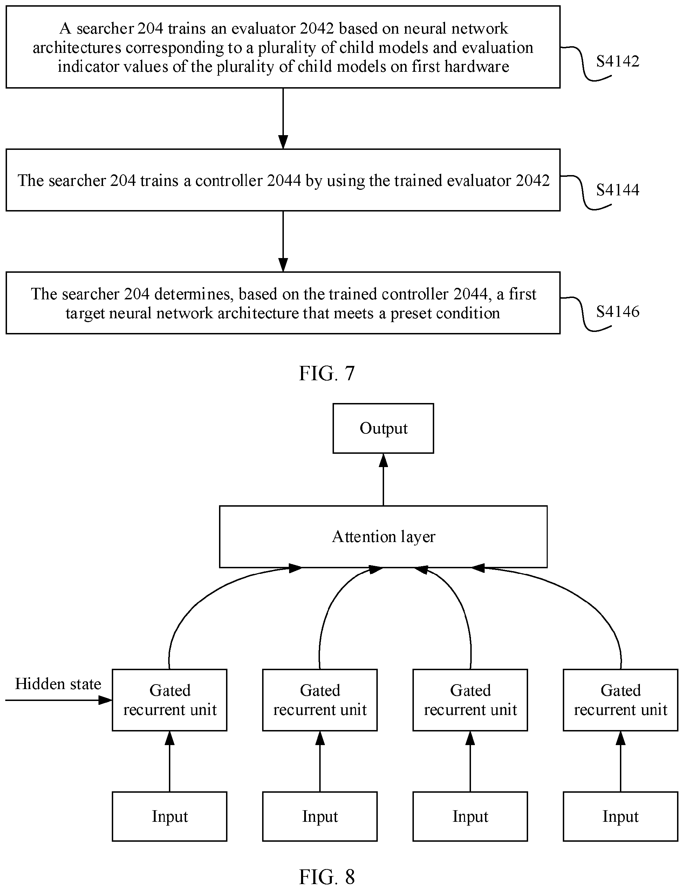

Refer to FIG. 7. That the searcher 204 determines, based on the neural network architectures corresponding to the plurality of child models and the evaluation indicator values of the plurality of child models on the first hardware, a first target neural network architecture that meets a preset condition specifically includes the following steps.

S4142: The searcher 204 trains an evaluator 2042 based on the neural network architectures corresponding to the plurality of child models and the evaluation indicator values of the plurality of child models on the first hardware.

The evaluator 2042 belongs to a neural network. The neural network uses a neural network architecture as an input. Specifically, a code of the neural network architecture is used as the input, and an evaluation indicator value corresponding to the neural network architecture is used as an output. In other words, the evaluator 2042 is configured to predict an evaluation indicator value of the neural network architecture.

In actual application, the evaluator 2042 may be implemented by using a time recursive network such as a gated recurrent unit (gated recurrent unit, GRU) or a long short-term memory (long short-term memory, LSTM). Specifically, the searcher 204 constructs the evaluator 2042 by using the GRU or the LSTM, and then trains the evaluator 2042 based on the neural network architectures corresponding to the plurality of child models and the evaluation indicator values of the plurality of child models on the first hardware. A training process is specifically as follows: The neural network architecture and the evaluation indicator value into the evaluator 2042 is input, supervised learning is performed by using the input evaluation indicator value as a label of the neural network architecture, and a weight of a first initial model is updated based on the evaluation indicator value predicted by the evaluator 2042 and a loss value determined by the label. When a training end condition is met, for example, the evaluator 2042 tends to converge or a loss value of the evaluator 2042 is less than a preset loss value, training is stopped. The trained evaluator 2042 can be configured to predict an evaluation indicator value of a neural network architecture.

For ease of understanding, a GRU-based implementation is used as an example to describe this embodiment of this application. Specifically, the evaluator 2042 includes at least one GRU cell. The GRU cell uses a neural network architecture as an input, and uses an evaluation indicator value as an output. Considering sequence association, the evaluator 2042 may include a plurality of GRU cells, and the plurality of GRU cells are in a cascading connection. A hidden state of one GRU cell may be input to a next GRU cell, so that the next GRU cell infers an evaluation indicator value based on the hidden state. It should be noted that, in some possible implementations, the evaluator 2042 may further use an attention mechanism to introduce an attention layer for regression.

FIG. 8 is a schematic diagram of a structure of the evaluator 2042. As shown in FIG. 8, a code of a neural network architecture (arch code) may be used as an input and separately input into the GRU cells. Each GRU cell performs processing based on the currently input arch code and a hidden state (hidden state) of a previous GRU, and then regression is performed by using an attention layer (attention layer), so that an evaluation indicator value can be output. A weight of the evaluator 2042 may be updated based on the output evaluation indicator value and an evaluation indicator value in the input training data (that is, the label in the training data). In this way, training of the evaluator 2042 can be implemented. When the evaluator 2042 converges, the training of the evaluator 2042 may be stopped.

The training of the evaluator 2042 belongs to supervised learning. Based on this, the searcher 204 may perform iterative training by using a gradient descent method such as a stochastic gradient descent method, so that training efficiency is improved and training convergence time is reduced.

S4144: The searcher 204 trains the controller 2044 by using the trained evaluator 2042.

The controller 2044 belongs to a neural network. In a specific implementation, the controller 2044 may be implemented by using a GRU. Specifically, the controller 2044 may be trained by using a reinforcement learning method. A training process of the controller 2044 is specifically as follows: The controller 2044 provides a code of a neural network architecture according to a search space definition, predicts an evaluation indicator value of the neural network architecture by using the evaluator 2042, uses the predicted evaluation indicator value, which replaces an evaluation indicator value (a real evaluation indicator value) of a child model obtained based on the neural network architecture, as a reward (reward) of the controller 2044, and updates a parameter of the controller 2044 based on the reward. The foregoing steps are repeated. When the trained controller 2044 meets a training termination condition, for example, when the trained controller 2044 converges, the controller 2044 may output a candidate neural network architecture.

S4146: The searcher 204 determines, based on the trained controller 2044, the first target neural network architecture that meets the preset condition.

Specifically, the searcher 204 obtains the candidate neural network architecture output by the controller 2044, obtains a candidate initial child model based on the candidate neural network architecture, then trains the candidate initial child model to obtain a candidate child model, and then performs inference on the candidate child model to obtain an evaluation indicator value of the candidate child model. A target child model that meets a preset condition may be determined from the candidate child model based on the evaluation indicator value, and a neural network architecture corresponding to the target child model is the first target neural network architecture.

In some possible implementations, the controller 2044 may alternatively send the candidate neural network architecture to a user apparatus, and the user determines, from the candidate neural network architecture by using the user apparatus, the first target neural network architecture that meets the preset condition. This is not limited in this embodiment.

Based on the foregoing content description, in the neural architecture search method provided in this application, the evaluator 2042 can reuse the training data, so that an amount of training data is reduced, and a requirement for a space sampling amount is lowered. In addition, the evaluator 2042 can converge quickly based on a small quantity of samples, and then the evaluator 2042 may be configured to provide feedback to the neural network architecture provided by the controller 2044, so that the controller 2044 can also converge quickly. This improves training efficiency, and further reduces the search duration, and improves the search efficiency.

In some implementations, a user needs to extend the child model to other hardware or migrate the child model to other hardware such as second hardware when the user needs to control costs or when a supply-demand relationship changes (for example, a specific type of hardware may not be supplied as scheduled). However, when a design of the second hardware is different from a design of the first hardware, a first target neural network architecture suitable for the first hardware may not be suitable for the second hardware. Based on this, an embodiment of this application further provides a method for searching for a second target neural network architecture suitable for second hardware. The second hardware may be known hardware or new hardware.

In the method, a child model obtained through training when the first target neural network architecture suitable for the first hardware is searched for can be used without training a child model again. Therefore, the second target neural network architecture suitable for the second hardware can be quickly determined. Further, an evaluation indicator value includes two types of evaluation indicator values, a first-type evaluation indicator value that changes as hardware changes, and a second-type evaluation indicator value that does not change as hardware changes. When an evaluation indicator value used for searching for the first target neural network architecture suitable for the first hardware includes a second-type evaluation indicator value, the second-type evaluation indicator value of the child model on the first hardware may be further used as a second-type evaluation indicator value of the child model on the second hardware. In this way, a period of time for performing inference on the child model on the second hardware is reduced. This further reduces search time and improves search efficiency.

The method provided in this embodiment of this application is described below with reference to the accompanying drawings.

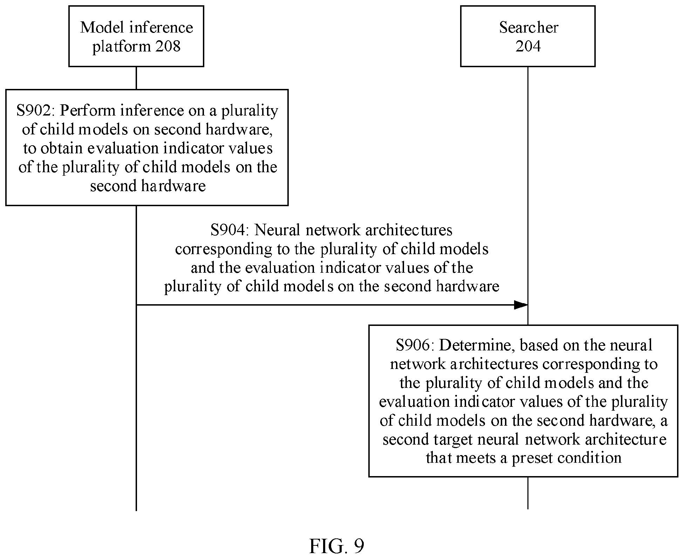

Referring to a flowchart of a method for searching for a neural network architecture suitable for second hardware shown in FIG. 9, the method includes the following steps.

S902: A model inference platform 208 performs inference on a plurality of child models on second hardware, to obtain evaluation indicator values of the plurality of child models on the second hardware.

S904: The model inference platform 208 sends, to a searcher 204, neural network architectures corresponding to the plurality of child models and the evaluation indicator values of the plurality of child models on the second hardware.

For specific implementations in which the model inference platform 208 performs inference on the plurality of child models on the second hardware, and the model inference platform 208 sends, to the searcher 208, the neural network architectures corresponding to the plurality of child models and the evaluation indicator values of the plurality of child models on the second hardware, refer to related content descriptions in the embodiment shown in FIG. 4.

When the evaluation indicator value is the second-type evaluation indicator value, S902 and S904 may not be performed when the method for searching for a second target neural network architecture suitable for second hardware is performed. The searcher 204 may directly use an evaluation indicator value of the child model on first hardware as the evaluation indicator value of the child model on the second hardware.

S414: The searcher 204 determines, based on the neural network architectures corresponding to the plurality of child models and the evaluation indicator values of the plurality of child models on the second hardware, a second target neural network architecture that meets a preset condition.

A target neural network architecture determined by the searcher 204 based on the neural network architectures corresponding to the plurality of child models and the evaluation indicator values of the plurality of child models on the second hardware is a second target neural network architecture suitable for the second hardware. For a specific implementation thereof, refer to related content descriptions in the embodiments shown in FIG. 4 and FIG. 7, and details are not described herein again.

When the evaluation indicator value includes only the second-type evaluation indicator value, a first target neural network architecture that is suitable for the first hardware and that is obtained through search by the search system is also suitable for the second hardware. That is, when the evaluation indicator value includes only the second-type evaluation indicator value, the first target neural network architecture that is suitable for the first hardware and that is obtained through the search by the search system is the same as a second target neural network architecture that is suitable for the second hardware and that is obtained through the search by the search system.

For ease of understanding, this application further provides a specific example of searching for a second target neural network architecture suitable for second hardware.

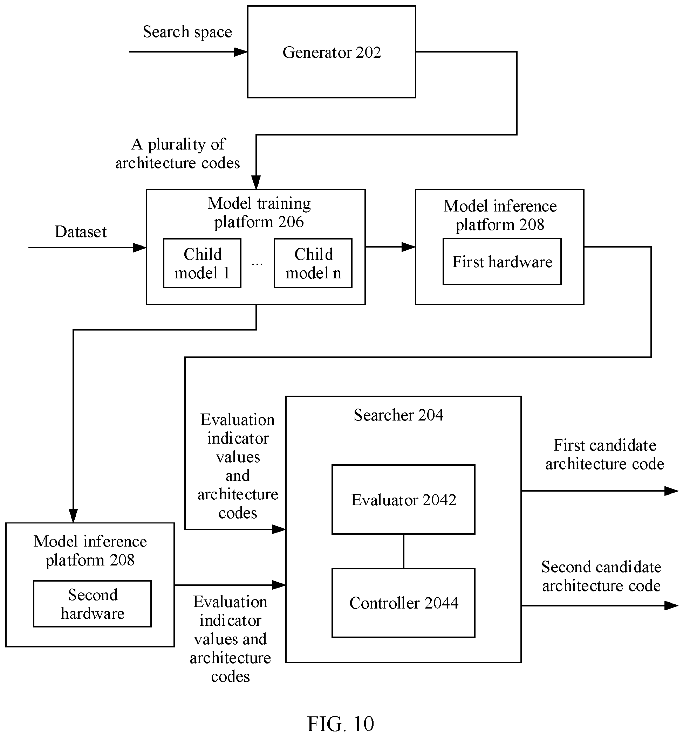

As shown in FIG. 10, an evaluation indicator value used for searching for a target neural network framework suitable for first hardware (device type 1) includes a first-type evaluation indicator value and a second-type evaluation indicator value. The used first-type evaluation indicator value is a performance value indicating model inference time, and the used second-type evaluation indicator value is a precision value indicating accuracy. A searcher 204 may directly obtain a precision value of a child model on the first hardware as a precision value of the child model on the second hardware, and perform inference on the child model on the second hardware to obtain a performance value indicating model inference time of the child model on the second hardware.

In this way, the searcher 204 may obtain an evaluation indicator value of the child model on the second hardware. The searcher 204 trains an evaluator 2042 based on neural network architectures (specifically, codes of the neural network architectures) corresponding to a plurality of child models and evaluation indicator values of the plurality of child models on the second hardware (that is, evaluation indicator values and architecture codes in the figure), and predicts, by using the trained evaluator 2042, a neural network architecture provided by a controller 2044, to obtain an evaluation indicator value corresponding to the neural network architecture. The searcher 204 updates a parameter of the controller 2044 by using the evaluation indicator value as a reward, to train the controller 2044. When the controller 2044 converges, a candidate neural network architecture (specifically, a code of the candidate neural network architecture) may be output. The second target neural network architecture suitable for the second hardware may be determined based on the candidate neural network architecture. For ease of description, in the figure, a code of a candidate neural network architecture suitable for the first hardware is briefly referred to as a first candidate architecture code, and a code of a candidate neural network architecture suitable for the second hardware is briefly referred to as a second candidate architecture code.

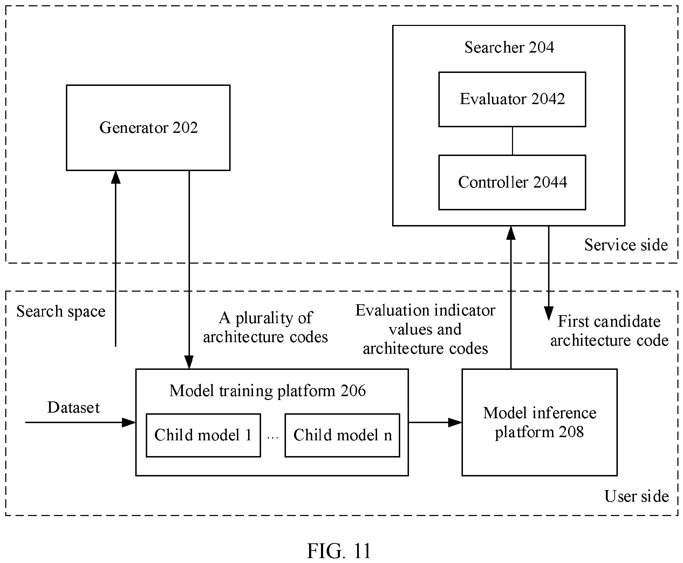

In some possible implementations, the search system may further have a function of protecting data security and model privacy. As shown in FIG. 11, because a training process of a child model is decoupled from a neural architecture search process, a search system service side may not include a model training platform 206 and a model inference platform 208, and specifically include an architecture generation module and an architecture search module, that is, include a generator 202 and a searcher 204. Other steps such as model training and model inference may be performed on a model training platform 206 and a model inference platform 208 on a user side, to protect user data/model privacy.

As shown in FIG. 11, the generator 202 may provide an application programming interface (application programming interface, API) for a user, and the generator 202 may process a search space by using the API, to generate a plurality of neural network architectures for the user.

The plurality of neural network architectures obtained by a user apparatus exist in a form of codes of the neural network architectures. The neural network architectures can be obtained after the codes of the neural network architectures are parsed. The model training platform 206 on the user side may perform weight initialization on the neural network architecture to obtain an initial child model, and then train the initial child model by using a dataset on the user side, to obtain a child model. The model inference platform 208 on the user side may perform inference on the child model on first hardware, to obtain an evaluation indicator value of the child model on the first hardware.

The searcher 204 obtains neural network architectures (specifically, codes of the neural network architectures) corresponding to a plurality of child models and evaluation indicator values of the plurality of child models on first hardware, trains an evaluator 2042 based on the codes of the neural network architectures and the evaluation indicator values, and when training of the evaluator 2042 is completed, trains a controller 2044 by using the trained evaluator 2042. When training of the controller 2044 is completed, the searcher 204 may obtain a candidate neural network architecture output by the controller 2044, and may determine, from the candidate neural network architecture, a first target neural network architecture that meets a preset condition. The user side interacts with the service side through the codes of the neural network architectures and the evaluation indicator values of the child models. Therefore, data and model privacy are not disclosed, and security is ensured.

In some possible implementations, the search system may further perform search by using training data provided by different users without data exchange. In this way, precision/performance of a neural network architecture obtained through the search can be improved, and a data silo problem in a process of neural architecture search can be resolved.

Specifically, the generator 202 may generate N neural network architectures. Weight initialization may be performed on the N neural network architectures to obtain N initial child models, where N is greater than 1. The different users provide M datasets for training the initial child models, where M is greater than 1. Considering privacy and data security, the foregoing M datasets are not used for data exchange. Based on this, the search system may perform search in the following manners.

In a first implementation, the model training platform 206 performs federated learning on each initial child model by using the M datasets, to obtain N child models, and the model inference platform 208 performs, on first hardware, inference on the N child models obtained through federated learning, to obtain evaluation indicator values of the child models on the first hardware. The searcher 204 uses the evaluation indicator values that are of the child models obtained by performing federated learning based on the N initial child models as labels of the foregoing N neural network architectures, to obtain training data, and trains the evaluator 2042 by using the training data. When training of the evaluator 2042 is completed, for example, when the evaluator 2042 converges, the evaluator 2042 is used to predict a neural network architecture provided by the controller 2044, to obtain an evaluation indicator value corresponding to the neural network architecture, and feed back the evaluation indicator value to the controller 2044 as a reward, to update a parameter of the controller 2044 and train the controller 2044, so as to search for a first target neural network architecture suitable for the first hardware.

In a second implementation, the model training platform 206 trains each initial child model by using the M datasets. In this way, N^{∗}M child models may be obtained. The model inference platform 208 may perform inference on the N^{∗}M child models on first hardware, to obtain evaluation indicator values of the N^{∗}M child models on the first hardware. The evaluation indicator values of the N^{∗}M child models may be used as labels of neural network architectures corresponding to the N^{∗}M child models, to form training data for training the evaluator 2042.

During training of the evaluator 2042, the training data may be divided into M groups based on the datasets used for training the initial child models. In this way, it is equivalent to that M groups of training data are provided for the evaluator 2042. The searcher 204 may train the evaluator 2042 in a federated learning manner by using the M groups of training data. When training of the evaluator 2042 is completed, the searcher 204 may predict, by using the evaluator 2042, a neural network architecture provided by the controller 2044, to obtain an evaluation indicator value corresponding to the neural network architecture. The evaluation indicator value is used as feedback for training the controller 2044, to search for a first target neural network architecture suitable for the first hardware.

In a third implementation, the N initial child models are divided into M groups of initial child models, the M groups of initial child models are in a one-to-one correspondence with the M datasets, and the model training platform 206 trains the M groups of initial child models by using the corresponding datasets, to obtain M groups of child models. The model inference platform 208 may perform inference on the N child models on the first hardware, to obtain evaluation indicator values of the N child models on the first hardware. A neural network architecture corresponding to each child model and an evaluation indicator value of the child model may form one piece of training data. In this way, M groups of training data may be obtained. The searcher 204 may train the evaluator 2042 in a federated learning manner by using the M groups of training data. When training of the evaluator 2042 is completed, the searcher 204 predicts, by using the evaluator 2042, a neural network architecture provided by the controller 2044, to obtain an evaluation indicator value corresponding to the neural network architecture. The evaluation indicator value is used as feedback for training the controller 2044, to search for a first target neural network architecture suitable for the first hardware.

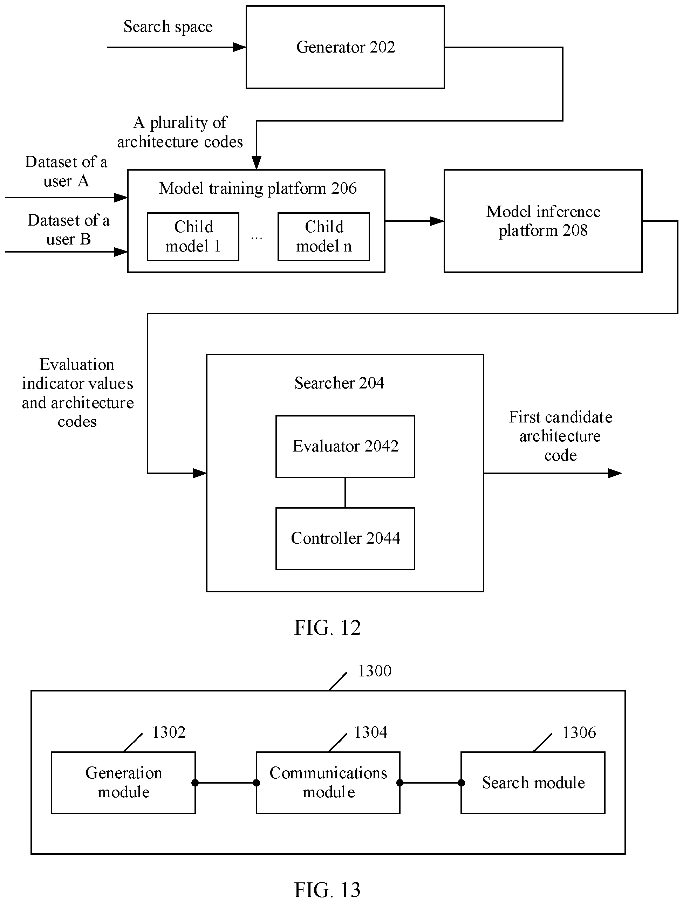

To facilitate understanding, in an embodiment of this application, an example in which two users separately provide datasets is further used to describe a neural architecture search method. As shown in FIG. 12, a generator 202 may generate a plurality of neural network architectures based on a search space, and the plurality of neural network architectures may be represented by using codes. A user A and a user B have respective datasets. The user A and the user B may provide the dataset of the user A and the dataset of the user B to a model training platform 206. The model training platform 206 may parse the codes of the neural network architectures to obtain the neural network architectures, then perform weight initialization on the neural network architectures to obtain initial child models, and then train each of the plurality of initial child models by using the dataset of the user A and the dataset of the user B and by using a federated learning algorithm, to obtain a plurality of child models.

Then, a model inference platform 208 may perform inference on the plurality of child models on first hardware, to obtain evaluation indicator values of the plurality of child models on the first hardware. In a scenario in FIG. 12, two child models may be obtained based on each neural network architecture, including a child model obtained through training based on training data provided by the user A and a child model obtained through training based on training data provided by the user B. The model inference platform 208 performs inference on each child model on the first hardware, to obtain an evaluation indicator value of the child model on the first hardware. Each evaluation indicator value and a corresponding neural network architecture may form one piece of training data. In this way, two pieces of training data may be obtained based on one neural network architecture. The training data may be divided into two groups based on a dataset. A searcher 204 may use the two groups of training data to train an evaluator 2042 by using a federated learning algorithm. When training of the evaluator 2042 is completed, the trained evaluator 2042 is used to predict a neural network architecture provided by a controller 2044, to obtain an evaluation indicator value corresponding to the neural network architecture. The evaluation indicator value may be used as feedback for training the controller 2044, to search for a first target neural network architecture suitable for the first hardware.

The neural architecture search method provided in embodiments of this application is described above in detail with reference to FIG. 1 to FIG. 12. A neural architecture search apparatus and a device provided in embodiments of this application are described with reference to the accompanying drawings below.

Referring to a schematic diagram of a structure of a neural architecture search apparatus shown in FIG. 13, the apparatus 1300 is applied to a search system, the search system includes a generator and a searcher, and the apparatus 1300 includes:
a generation module 1302, configured to generate a plurality of neural network architectures based on the search space;
a communications module 1304, configured to obtain evaluation indicator values of a plurality of child models obtained based on the plurality of neural network architectures on first hardware; and
a search module 1306, configured to determine, based on the neural network architectures corresponding to the plurality of child models and the evaluation indicator values of the plurality of child models on the first hardware, a first target neural network architecture that meets a preset condition.

For a specific implementation of the generation module 1302, refer to related content description of S402 in the embodiment shown in FIG. 4. For a specific implementation of the communications module 1304, refer to related content description of S412 in the embodiment shown in FIG. 4. For a specific implementation of the search module 1306, refer to related content description of S414 in the embodiment shown in FIG. 4. Details are not described herein again.

In some possible implementations, the searcher includes an evaluator and a controller, and the search module 1306 is specifically configured to:
train the evaluator based on the neural network architectures corresponding to the plurality of child models and the evaluation indicator values of the plurality of child models on the first hardware; and
train the controller by using the trained evaluator, and determine, based on the trained controller, the first target neural network architecture that meets the preset condition.

For a specific implementation of the search module 1306, refer to related content description in the embodiment shown in FIG. 7, and details are not described herein again.

In some possible implementations, the evaluation indicator values of the plurality of child models on the first hardware indicate evaluation indicator values obtained by performing inference on the plurality of child models on the first hardware.

In some possible implementations, the evaluation indicator value includes a hardware-related performance value, and the communications module 1304 is further configured to:
obtain performance values of the plurality of child models on second hardware, where the performance values of the plurality of child models on the second hardware are obtained by performing inference on the plurality of child models on the second hardware; and
the search module 1306 is further configured to:
   determine, based on the neural network architectures corresponding to the plurality of child models and the performance values of the plurality of child models on the second hardware, a second target neural network architecture that meets a preset condition.

For a specific implementation of the communications module 1304 and a specific implementation of the search module 1306, refer to related content description in the embodiment shown in FIG. 9, and details are not described herein again.

In some possible implementations, the hardware-related performance value includes any one or more of model inference time, a quantity of activations, throughput, power consumption, and video RAM usage.

In some possible implementations, the search space is represented by using an attribute value space of each attribute of a neuron.

The generation module 1302 is specifically configured to:
randomly select an attribute value for each attribute from the attribute value space of the attribute of the neuron, to obtain the plurality of neural network architectures.

In some possible implementations, the generation module 1302 is specifically configured to:
provide an application programming interface to a user, and generate the plurality of neural network architectures for the user through the application programming interface.

In some possible implementations, the search system further includes a model training platform, and the apparatus 1300 further includes a training module, configured to:
perform federated learning on each of N initial child models by using M datasets, to obtain N child models; or
train each of N initial child models by using M datasets, to obtain N^{∗}M child models; or
divide N initial child models into M groups of initial child models, where the M groups of initial child models are in a one-to-one correspondence with M datasets, and train the M groups of initial child models by using the corresponding datasets, to obtain M groups of child models.

The N initial child models are obtained based on the plurality of neural network architectures, and the initial child models are in a one-to-one correspondence with the neural network architectures, where N is greater than 1, and M is greater than 1.

The neural architecture search apparatus 1300 according to this embodiment of this application may correspondingly perform the methods described in embodiments of this application, and the foregoing and other operations and/or functions of the modules of the neural architecture search apparatus 1300 are separately used to implement corresponding procedures of the methods in FIG. 4, FIG. 7, and FIG. 9. For brevity, details are not described herein again.

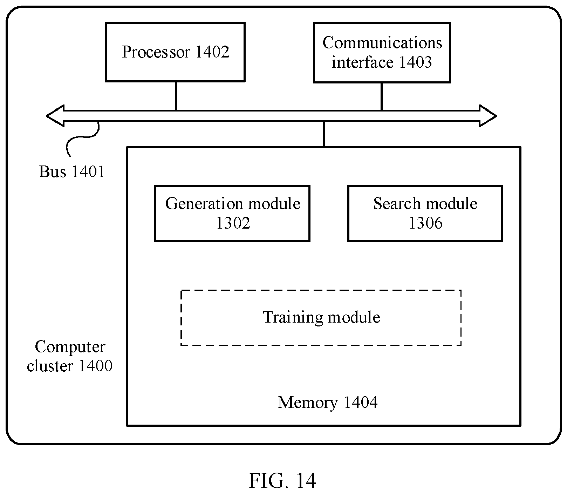

The foregoing neural architecture search apparatus 1300 may be implemented by using a computer cluster, and the computer cluster includes at least one computer. FIG. 14 provides a computer cluster. Descriptions are provided by using an example in which the computer cluster shown in FIG. 14 includes one computer. As shown in FIG. 14, the computer cluster 1400 may be specifically configured to implement a function of the neural architecture search apparatus 1300 in the embodiment shown in FIG. 13. The computer cluster 1400 includes a bus 1401, a processor 1402, a communications interface 1403, and a memory 1404. The processor 1402, the memory 1404, and the communications interface 1403 communicate with each other through the bus 1401. The bus 1401 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one bold line in FIG. 14. However, it does not indicate that there is only one bus or only one type of bus. The communications interface 1403 is configured to communicate with the outside. For example, the communications interface 1403 may obtain the evaluation indicator values of the plurality of child models obtained based on the plurality of neural network architectures on the first hardware, and obtain the evaluation indicator values of the plurality of child models on the second hardware.

The processor 1402 may be a central processing unit (central processing unit, CPU). The memory 1404 may include a volatile memory (volatile memory), for example, a random access memory (random access memory, RAM). Alternatively, the memory 1404 may include a non-volatile memory (non-volatile memory), for example, a read-only memory (read-only memory, ROM), a flash memory, an HDD, or an SSD.

The memory 1404 stores executable code, and the processor 1402 executes the executable code to perform the foregoing neural architecture search method.

Specifically, when the embodiment shown in FIG. 13 is implemented, and the modules described in the embodiment in FIG. 13 are implemented by using software, software or program code required for performing functions of the generation module 1302 and the search module 1306 in FIG. 13 as well as the training module is stored in the memory 1404. A function of the communications module 1304 is implemented by using the communications interface 1403.

The processor 1402 is configured to execute instructions in the memory 1404, for example, execute instructions corresponding to the generation module 1302, to generate a plurality of neural network architectures based on a search space. The communications interface 1403 obtains evaluation indicator values that are of a plurality of child models obtained based on the plurality of neural network architectures and that are on first hardware, and transmits the evaluation indicator values to the processor 1402 by using the bus 1401. The processor 1402 executes instructions corresponding to the search module 1306 to determine, based on the neural network architectures corresponding to the plurality of child models and the evaluation indicator values of the plurality of child models on the first hardware, a first target neural network architecture that meets a preset condition, to perform the neural architecture search method provided in embodiments of this application.

When the processor 1402 determines, based on the neural network architectures corresponding to the plurality of child models and the evaluation indicator values of the plurality of child models on the first hardware, the first target neural network architecture that meets the preset condition, the processor 1402 specifically trains an evaluator 2042 based on the neural network architectures corresponding to the plurality of child models and the evaluation indicator values of the plurality of child models on the first hardware (that is, training data of the evaluator 2042), and then trains a controller 2044 by using the trained evaluator 2042, and determines, based on the trained controller 2044, the first target neural network architecture that meets the preset condition.

In some possible implementations, a plurality of initial child models may be obtained through weight initialization on the plurality of neural network architectures. The plurality of initial child models are in a one-to-one correspondence with the plurality of neural network architectures. In this embodiment of this application, there are N initial child models. After generating the plurality of neural network architectures, the processor 1402 may further execute instructions corresponding to the training module, to train the initial child models to obtain the plurality of child models.

The processor 1402 specifically trains the initial child models in the following manners:
a first manner is to perform federated learning on each of N initial child models by using M datasets, to obtain N child models; or
a second manner is to train each of N initial child models by using M datasets, to obtain N^{∗}M child models; or
a third manner is to divide N initial child models into M groups of initial child models, where the M groups of initial child models are in a one-to-one correspondence with M datasets, and train the M groups of initial child models by using the corresponding datasets, to obtain M groups of child models.

It should be noted that, when the processor 1402 determines, in the second manner or the third manner based on the neural network architectures corresponding to the plurality of child models and the evaluation indicator values of the plurality of child models on the first hardware, the first target neural network architecture that meets the preset condition, the processor 1402 groups the training data based on the datasets used for training the initial child models, and then trains the evaluator 2042 by using different groups of training data and a federated learning algorithm. Then, the processor 1402 trains the controller 2044 based on the trained evaluator, and determines, based on the trained controller 2044, the first target neural network architecture that meets the preset condition.

An embodiment of this application further provides a computer-readable storage medium. The computer-readable storage medium includes instructions, and the instructions instruct a computer cluster 1400 to perform the foregoing neural architecture search method applied to the neural architecture search apparatus 1300.

An embodiment of this application further provides a computer program product. When the computer program product is executed by a computer, the computer performs any one of the foregoing neural architecture search methods. The computer program product may be a software installation package. If any one of the foregoing neural architecture search methods needs to be used, the computer program product may be downloaded, and the computer program product may be executed on a computer.

In addition, it should be noted that the described apparatus embodiment is merely an example. The units described as separate parts may or may not be physically separate, and parts displayed as units may or may not be physical units, may be located in one position, or may be distributed on a plurality of network units. Some or all of the modules may be selected depending on actual requirements to achieve the objectives of the solutions in embodiments. In addition, in the accompanying drawings of the apparatus embodiments provided in this application, connection relationships between modules indicate that the modules have communication connections with each other, which may be specifically implemented as one or more communications buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the method described in embodiments of this application.

All or some of the foregoing embodiments may be implemented by using software, hardware, firmware, or any combination thereof. When the software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

## Claims

1. A neural architecture search method, applied to a search system, wherein the search system comprises a generator and a searcher, and the method comprises:
generating, by the generator, a plurality of neural network architectures based on a search space;
obtaining, by the searcher, evaluation indicator values of a plurality of child models obtained based on the plurality of neural network architectures on first hardware; and
determining, by the searcher based on the neural network architectures corresponding to the plurality of child models and the evaluation indicator values of the plurality of child models on the first hardware, a first target neural network architecture that meets a preset condition.

2. The method according to claim 1, wherein the searcher comprises an evaluator and a controller, and the determining, by the searcher based on the neural network architectures corresponding to the plurality of child models and the evaluation indicator values of the plurality of child models on the first hardware, a first target neural network architecture that meets a preset condition comprises:
training, by the searcher, the evaluator based on the neural network architectures corresponding to the plurality of child models and the evaluation indicator values of the plurality of child models on the first hardware; and
training, by the searcher, the controller by using the trained evaluator, and determining, based on the trained controller, the first target neural network architecture that meets the preset condition.

3. The method according to claim 1 or 2, wherein the evaluation indicator values of the plurality of child models on the first hardware represent evaluation indicator values obtained by performing inference on the plurality of child models on the first hardware.

4. The method according to any one of claims 1 to 3, wherein the evaluation indicator value comprises a hardware-related performance value, and the method further comprises:
obtaining, by the searcher, performance values of the plurality of child models on second hardware, wherein the performance values of the plurality of child models on the second hardware are obtained by performing inference on the plurality of child models on the second hardware; and
determining, by the searcher based on the neural network architectures corresponding to the plurality of child models and the performance values of the plurality of child models on the second hardware, a second target neural network architecture that meets a preset condition.

5. The method according to claim 4, wherein the hardware-related performance value comprises any one or more of model inference time, a quantity of activations, throughput, power consumption, and video RAM usage.

6. The method according to any one of claims 1 to 5, wherein the search space is represented by using an attribute value space of each attribute of a neuron; and
the generating, by the generator, a plurality of neural network architectures based on a search space comprises:
randomly selecting, by the generator, an attribute value for each attribute from the attribute value space of the attribute of the neuron, to obtain the plurality of neural network architectures.

7. The method according to any one of claims 1 to 6, wherein the generating, by the generator, a plurality of neural network architectures based on a search space comprises:
providing, by the generator, an application programming interface to a user, and generating the plurality of neural network architectures for the user through the application programming interface.

8. The method according to any one of claims 1 to 7, wherein the search system further comprises a model training platform, and the method further comprises:
performing, by the model training platform, federated learning on each of N initial child models by using M datasets, to obtain N child models; or
training, by the model training platform, each of N initial child models by using M datasets, to obtain N^{∗}M child models; or
dividing, by the model training platform, N initial child models into M groups of initial child models, wherein the M groups of initial child models are in a one-to-one correspondence with M datasets, and training the M groups of initial child models by using the corresponding datasets, to obtain M groups of child models; wherein
the N initial child models are obtained based on the plurality of neural network architectures, and the initial child models are in a one-to-one correspondence with the neural network architectures, wherein N is greater than 1, and M is greater than 1.

9. A neural architecture search apparatus, applied to a search system, wherein the search system comprises a generator and a searcher, and the apparatus comprises:
a generation module, configured to generate a plurality of neural network architectures based on a search space;
a communications module, configured to obtain evaluation indicator values of a plurality of child models obtained based on the plurality of neural network architectures on first hardware; and
a search module, configured to determine, based on the neural network architectures corresponding to the plurality of child models and the evaluation indicator values of the plurality of child models on the first hardware, a first target neural network architecture that meets a preset condition.

10. The apparatus according to claim 9, wherein the searcher comprises an evaluator and a controller, and the search module is specifically configured to:
train the evaluator based on the neural network architectures corresponding to the plurality of child models and the evaluation indicator values of the plurality of child models on the first hardware; and
train the controller by using the trained evaluator, and determine, based on the trained controller, the first target neural network architecture that meets the preset condition.

11. The apparatus according to claim 9 or 10, wherein the evaluation indicator values of the plurality of child models on the first hardware represent evaluation indicator values obtained by performing inference on the plurality of child models on the first hardware.

12. The apparatus according to any one of claims 9 to 11, wherein the evaluation indicator value comprises a hardware-related performance value, and the communications module is further configured to:
obtain performance values of the plurality of child models on second hardware, wherein the performance values of the plurality of child models on the second hardware are obtained by performing inference on the plurality of child models on the second hardware; and
the search module is further configured to:
determine, based on the neural network architectures corresponding to the plurality of child models and the performance values of the plurality of child models on the second hardware, a second target neural network architecture that meets a preset condition.

13. The apparatus according to claim 12, wherein the hardware-related performance value comprises any one or more of model inference time, a quantity of activations, throughput, power consumption, and video RAM usage.

14. The apparatus according to any one of claims 9 to 13, wherein the search space is represented by using an attribute value space of each attribute of a neuron; and
the generation module is specifically configured to:
randomly select an attribute value for each attribute from the attribute value space of the attribute of the neuron, to obtain the plurality of neural network architectures.

15. The apparatus according to any one of claims 9 to 14, wherein the generation module is specifically configured to:
provide an application programming interface to a user, and generate the plurality of neural network architectures for the user through the application programming interface.

16. The apparatus according to any one of claims 9 to 15, wherein the search system further comprises a model training platform, and the apparatus further comprises a training module, configured to:
perform federated learning on each of N initial child models by using M datasets, to obtain N child models; or
train each of N initial child models by using M datasets, to obtain N^{∗}M child models; or
divide N initial child models into M groups of initial child models, wherein the M groups of initial child models are in a one-to-one correspondence with M datasets, and train the M groups of initial child models by using the corresponding datasets, to obtain M groups of child models; wherein
the N initial child models are obtained based on the plurality of neural network architectures, and the initial child models are in a one-to-one correspondence with the neural network architectures, wherein N is greater than 1, and M is greater than 1.

17. A computer cluster, wherein the computer cluster comprises at least one computer, and each computer comprises a processor and a memory; and
the processor of the at least one computer is configured to execute instructions stored in the memory of the at least one computer, so that the computer cluster performs the method according to any one of claims 1 to 8.

18. A computer-readable storage medium, comprising instructions, wherein when the instructions are run on a computer cluster, the computer cluster performs the method according to any one of claims 1 to 8.
